# EUROPÄISCHE PATENTSCHRIFT

(11) **EP 3 453 006 B1**
(45) Veröffentlichungstag und Bekanntmachung des Hinweises auf die Patenterteilung: **28.02.2024**
(21) Anmeldenummer: 17723279.0
(22) Anmeldetag: 24.04.2017
(51) Int. Cl.: G08G 1/0967, H04W 84/00

(54) **VERFAHREN UND VORRICHTUNG FÜR VERKEHRSTEILNEHMER-INTERAKTION**
METHOD AND DEVICE FOR ROAD USER INTERACTION
PROCÉDÉ ET DISPOSITIF D'INTERACTION D'USAGERS DE LA ROUTE

(30) Priorität: 04.05.2016 DE 102016207791
(43) Veröffentlichungstag der Anmeldung: 13.03.2019
(73) Patentinhaber: Volkswagen Aktiengesellschaft, 38440 Wolfsburg (DE)
(72) Erfinder: KLEEN, Andro, 38124 Braunschweig (DE); HAAR, Adrian, 38448 Wolfsburg (DE); BENDEWALD, Lennart, 38442 Wolfsburg (DE); BUSSIUS, Annika, 38446 Wolfsburg (DE)
(86) Internationale Anmeldenummer: PCT/EP2017/059683
(87) Internationale Veröffentlichungsnummer: WO 2017/190973

(56) Entgegenhaltungen:
- EP-A1- 2 851 886
- DE-A1-102013 212 255
- US-A1- 2012 283 942
- US-A1- 2013 099 911

## Beschreibung

Die vorliegende Erfindung betrifft ein Verfahren zur Interaktion zwischen einem ersten und einem zweiten Verkehrsteilnehmer und betrifft ferner eine Vorrichtung für einen ersten Verkehrsteilnehmer und eine Vorrichtung für einen zweiten Verkehrsteilnehmer zur Interaktion zwischen den beiden Verkehrsteilnehmern.

DE 10 2012 218 935 A1 offenbart einen Autobahneinfädelassistenten und eine -steuerung, wobei das Fahrzeugeinfädelungssteuersystem ein Trägerkommunikationssystem in einem Trägerfahrzeug zum Austauschen von Fahrzeugpositions- und Fahrzeugkinematikdaten mit einem entfernten Kommunikationssystem in mindestens einem entfernten Fahrzeug umfasst. Aus Positionen und Bewegungswegen bestimmt ein Trägerprozessor eine Zeit bis zum Kreuzen zwischen dem Trägerfahrzeug und dem entfernten Fahrzeug während eines Einfädelmanövers und ein Trägerfahrzeug überträgt eine Trägerfahrzeug-Absichtsnachricht zum Aushandeln einer Einfädelposition zwischen dem Trägerfahrzeug und dem mindestens einen entfernten Fahrzeug. Ferner führt das Trägerfahrzeug das Einfädelmanöver unter Verwendung der ausgehandelten Einfädelposition aus. Die Einfädelabsicht des Fahrers wird übertragen und die Akzeptanz der Einfädelabsicht des Fahrers durch das entfernte Fahrzeug wird empfangen. Der Fahrer wird informiert, ob die ausgehandelte Einfädelposition akzeptiert wird. Das Trägerfahrzeug und das entfernte Fahrzeug können kontinuierlich gegenseitige Geschwindigkeitsprofile und Fahrspurpositionen austauschen, um das Einfädelmanöver zu koordinieren.

DE 10 2013 212 255 A1 offenbart ein Verfahren zum Austausch von Informationen zwischen mindestens zwei Fahrzeugen, wobei das erste Fahrzeug Informationen zur Beurteilung des von vor ihm befindlichen freien Raumes an das zweite Fahrzeug übermittelt und letzteres diese Informationen zur Beurteilung und/oder Einleitung entsprechender Fahrmanöver nutzt. Eine Information über den freien Raum wird von dem zweiten Fahrzeug empfangen und kann einem Fahrer des zweiten Fahrzeuges optisch oder akustisch ausgegeben werden.

EP 1 699 033 B1 offenbart ein Verfahren zur Fahrunterstützung, wobei ein Navigationsgerät einen Berührschirm hat und ein Bild ausgibt, auf welchem das Fahrzeug des Fahrers auf einer Karte zusammen mit Straßenmarkierungen dargestellt ist. Ein Führungssystem kann den Fahrer fragen, ob er in einen empfohlenen Raum einfädeln möchte und kann nach einem anderen Raum bzw. einer anderen Lücke suchen, falls der Fahrer verneint. Das Fahrzeug kann mit einem Fahrzeug-zu-Fahrzeug-Kommunikationssystem ausgestattet sein und es können Position, Geschwindigkeit und Beschleunigung von einem anderen Fahrzeug empfangen werden.

JP 2012 083 995 A2 offenbart ein Einfädelunterstützungssystem, wobei eine Fahrzeugkommunikation durchgeführt wird, wobei Position und Geschwindigkeit des Fahrzeuges übertragen werden und wobei Einstellungen der Fahrzeuggeschwindigkeit angeordnet werden.

EP 2 851 886 A1 offenbart ein Assistenzsystem für ein Fahrzeug, mit dem der Fahrer bei einem potentiellen Überholvorgang unterstützt werden soll. Hierfür wird das überholende Fahrzeug über die Fahrtroute des vor ihm fahrenden Fahrzeuges informiert. Es sollen unnötige Überholvorgänge dadurch vermieden werden, dass der Fahrer des überholenden Fahrzeuges anhand der übermittelten Fahrtroute erkennt, dass ein Überholvorgang sich nicht lohnt, weil das zu überholende Fahrzeug in kurzer Entfernung von der Straße abfahren wird.

US 2012/283942 A1 offenbart ein Navigationsverfahren für ein Fahrzeug, das entlang eines Straßensegments fährt, bei dem eine Warnung, Geschwindigkeitsempfehlung und/oder Empfehlung, die Spur zu wechseln oder den Fahrzeugabstand zu vergrößern, bereitgestellt wird, um eine effektive Spurzusammenführung mit einem anderen Straßensegment zu unterstützen. Das Navigationssystem überwacht hierfür die Position und Geschwindigkeit des Fahrzeugs und ermittelt die Durchschnittsgeschwindigkeit von Fahrzeugen, die auf dem anderen Straßenabschnitt fahren. Basierend darauf teilt das Navigationssystem die Durchschnittsgeschwindigkeit mit und empfiehlt eine Geschwindigkeitsänderung, wenn die überwachte Geschwindigkeit des Fahrzeugs nicht der Durchschnittsgeschwindigkeit auf dem anderen Straßenabschnitt entspricht.

JP 2014 134 897 A offenbart ein Assistenzsystem für eine Abstimmung bei einem Einfädeln zwischen zwei Fahrzeugen. Das erste Fahrzeug sendet eine Anfrage zum Einfädeln an das zweite Fahrzeug, wobei bei dem zweiten Fahrzeug die Anfrage angezeigt wird, um diese von seinem Fahrer zuzustimmen oder abzusagen. An das erste Fahrzeug wird dann eine Antwort zurückgesendet, um den Fahrer des ersten Fahrzeugs über die Kooperation zu informieren.

Herkömmliche Verfahren zum Unterstützen des Fahrverhaltens mehrerer Verkehrsteilnehmer führen nicht in allen Situationen zu einem reibungslosen, ungehinderten Führen der Fahrzeuge. Es ist somit eine Aufgabe der vorliegenden Erfindung, ein Verfahren zur Interaktion zwischen einem ersten und einem zweiten Verkehrsteilnehmer sowie eine Vorrichtung für einen ersten Teilnehmer und eine Vorrichtung für einen zweiten Verkehrsteilnehmer zur Interaktion zwischen den beiden Verkehrsteilnehmern vorzuschlagen, wobei Nachteile im Stand der Technik zumindest teilweise überwunden werden.

Die Aufgabe wird durch die Gegenstände der unabhängigen Ansprüche gelöst. Die abhängigen Ansprüche spezifizieren besondere Ausführungsformen der vorliegenden Erfindung.

Ausführungsformen der Erfindung setzen *human machine interaction* (HMI)-Konzepte ein, die darauf abzielen, die Interaktion zwischen verschiedenen Verkehrsteilnehmern zu optimieren. Ausführungsformen können vernetzende Technologien, wie zum Beispiel *"Uehicle-to-Uehicle* oder *"Vehicie-to-Infrastructure"* -Technologien (im Folgenden "V2V" bzw. "V2X" bezeichnet) verwenden. Dabei kann zum Senden von Daten und Signalen zum Beispiel ein gebräuchlicher WLAN-Standard oder auch eine Mobilkommunikationstechnologie, wie etwa 4G bzw. 5G-Netze Verwendung finden. Gemäß Ausführungsformen der Erfindung können diese Technologien verwendet werden, um die direkte Interaktion (bzw. auch indirekte Interaktion über ein oder mehrere Zwischenstationen, etwa Sende- und Empfangsmasten, Server) zwischen verschiedenen Verkehrsteilnehmern (Fahrzeug zu Fahrzeug, Fahrzeug zu Fußgänger, Fahrzeug zu Motorrad, Fahrzeug zu Lastkraftwagen, usw.) zu verbessern. Ausführungsformen können die manöverbasierte Interaktion im Sinner einer "direkten Kooperation" verbessern. Sekundär kann auch eine Optimierung der Verkehrsflüsse im Sinne eines Verkehrsmanagements erreicht werden.

Hinsichtlich der Gestaltung der Anzeige- und Bedienkonzepte kann damit ein grundlegender Paradigmenwechsel eintreten. Herkömmliche Systeme waren im Wesentlichen darauf gerichtet, die Interaktion des Fahrers mit den eigenen Fahrzeugsystemen zu verbessern (zum Beispiel zur Steuerung von Fahrerassistenz- oder infotainmentsystemen). Die in der vorliegenden Anmeldung beschriebenen HMI-Konzepte zielen darauf ab, die Interaktion zwischen verschiedenen Verkehrsteilnehmern zu optimieren. Dieser erweiterte Kontext, in dem die explizite Kommunikation zwischen Kooperationspartnern eine zentrale Rolle spielt, zum Beispiel das Versenden von Anfragen oder Angeboten, die Möglichkeit, diese anzunehmen oder abzulehnen, die Ableitung konkreter Handlungsempfehlungen usw., bietet Raum für eine Fülle von innovativen Interaktionskonzepten, die das Zusammenspiel verschiedener Verkehrsteilnehmer im Verkehr verbessern können.

Ausführungsformen können auch für das gesamte Automationsspektrum eine hohe Relevanz besitzen. Für den Bereich der hochautomatisierten Systeme können vor allem Konzepte der Außenkommunikation im Mittelpunkt stehen, die zum Beispiel das Verhalten eines automatisch fahrenden Fahrzeugs gegenüber einem Fußgänger nachvollziehbar machen sollen (Fußgänger wurde erkannt, Fahrzeug wartet usw.). Ergebnisse einer groß angelegten Befragungsstudie zeigen jedoch, dass gemäß dem Stand der Technik ca. 30 % aller Kooperationen fehlschlagen. Die Erfinder zielen darauf ab, diese und weitere Probleme abzumildern oder gar zu lösen.

Dabei kann in den Ausführungsformen der Erfindung umgesetzt werden, das jeweilige Umfeld eines Verkehrsteilnehmers und die Intentionen dieser umgebenden Verkehrsteilnehmer transparent und nachvollziehbar darzustellen. Darüber hinaus zielen Ausführungsformen der vorliegenden Erfindung darauf ab, die Kommunizierbarkeit dieser Informationen zu verbessern. Ausführungsformen erlauben auch, die Komplexität der Kommunikation so gering wie möglich zu halten. Das Stellen von Anfragen und darauf folgende Angebote werden gemäß Ausführungsformen der Erfindung nicht umständlicher sein als die Kommunikation gemäß dem Stand der Technik. Ausführungsformen können bestimmte Interaktionsschritte vereinfachen und sogar automatisch durchführen.

Die erfindungsgemäße Ausführungsform ist durch die Merkmale des unabhängigen Anspruchs 1 definiert.

Das Verfahren kann innerhalb eines aus den beiden Verkehrsteilnehmern bestehenden Systems oder auch unter Verwendung einer oder mehrerer zentraler Instanzen, wie etwa Server, Sende-/Empfangseinheiten usw. durchgeführt werden. Zum Senden von Signalen zwischen den Verkehrsteilnehmern können elektromagnetische Funkwellen verwendet werden. Zum Beispiel kann ein Industrie-WLAN-Technologie oder einer Mobilfunktechnologie zum Senden der Signale verwendet werden. Die Verkehrsteilnehmer können zum Beispiel Fahrzeuge, wie etwa ein PKW, ein LKW oder ein Motorrad oder ein Radfahrer, oder auch ein Fußgänger sein. Die Fahrmanöver- Anfrage, welche von dem ersten Verkehrsteilnehmer ausgesendet wird, kann an eine Vielzahl von anderen Verkehrsteilnehmern gerichtet sein, die sich in der Umgebung, insbesondere in dem Sendeumkreis des ersten Verkehrsteilnehmers befinden. Die Umgebung des ersten Verkehrsteilnehmers kann zum Beispiel durch die Reichweite eines Senders definiert sein, welcher der erste Verkehrsteilnehmer mit sich führt, etwa installiert in einem Fahrzeug. Alternativ kann die Umgebung des ersten Verkehrsteilnehmers durch eine weitere zentrale Instanz, etwa einen Server mit Sende-/Empfangseinheiten definiert werden, welcher zunächst die Fahrmanöver-Anfrage von dem ersten Teilnehmer empfängt und darauf basierend ein für die Fahrmanöver-Anfrage indikatives Anfragesignal aussendet, etwa von einem oder mehreren Sende- und Empfangsmasten, welche extern sowohl von dem ersten Verkehrsteilnehmer als auch dem zweiten Verkehrsteilnehmer sind. Die Umgebung kann zum Beispiel einen Raumbereich innerhalb eines Kreises um den ersten Verkehrsteilnehmer sein, welcher einen Radius von zum Beispiel 1 bis 3 km hat. Andere Werte sind möglich.

Der zweite Verkehrsteilnehmer kann entweder die Fahrmanöver-Anfrage direkt von dem ersten Verkehrsteilnehmer empfangen, ohne dass aus der Fahrmanöver-Anfrage ein abgeleitetes für die Fahrmanöver-Anfrage indikatives Anfragesignal erst von einer weiteren Instanz bzw. einem weiteren Sender erzeugt worden ist, oder kann den Inhalt der Fahrmanöver-Anfrage über das für die Fahrmanöver-Anfrage indikative Anfragesignal erhalten, welches von einem externen Sender (nach Empfang der ursprünglichen Fahrmanöver-Anfrage) erzeugt und ausgesendet worden ist. Dazu kann zum Beispiel eine Mobilfunk-Technologie, z. B. 4G, 5G-Technologie Verwendung finden. Sowohl der erste Verkehrsteilnehmer als auch der zweite Verkehrsteilnehmer kann Systeme zum Senden und zum Empfangen von Funksignalen umfassen. Beispielsweise können beide Verkehrsteilnehmer eine V2V-Ausstattung aufweisen.

Die Fahrmanöver-Anfrage kann bei einer Vielzahl von anderen Verkehrsteilnehmern empfangen werden. Nicht alle diese anderen Verkehrsteilnehmer müssen die Fahrmanöver-Anfrage annehmen. Zumindest jedoch der zweite Verkehrsteilnehmer nimmt die Fahrmanöver-Anfrage an und kann die Annahme an den ersten Teilnehmer senden. Das Annehmen der Fahrmanöver-Anfrage wird bei dem ersten Verkehrsteilnehmer visuell signalisiert, insbesondere in einer frei programmierbaren Kombinationsanzeige (auch FPK genannt). Die frei programmierbare Kombinationsanzeige kann in einem zentralen Bereich des Cockpits eines Fahrzeuges, zum Beispiel zwischen weiteren Instrumentenanzeigen angeordnet sein. Das FPK kann einen zweidimensionalen Schirm umfassen, der in der Lage ist, Farbbilder anzuzeigen. Die FPK kann als Berührschirm ausgeführt sein, wodurch eine Interaktion mit einem Fahrer des Fahrzeuges ermöglicht ist. Basierend auf der Fahrmanöver-Anfrage werden eine erste Fahrmanöver-Empfehlung an den ersten Verkehrsteilnehmer und eine zweite Fahrmanöver-Empfehlung an den zweiten Verkehrsteilnehmer bestimmt und auch dem jeweiligen Verkehrsteilnehmer signalisiert. Für diese Signalisierung kann ebenfalls die FPK eingesetzt werden. Damit wird eine für den Fahrer gut wahrnehmbare Signalisierung ermöglicht, was die Fahrsicherheit und ein Durchführen von zukünftigen Fahrmanövern erleichtern und verbessern kann.

Die Fahrmanöver-Anfrage kann eine Absicht des ersten Verkehrsteilnehmers umfassen, ein bestimmtes Fahrmanöver auszuführen. Beispiele für Fahrmanöver sind zum Beispiel ein Einfädeln auf einer Autobahn, ein Spurwechsel auf einer Autobahn, einer Landstraße oder im Stadtverkehr, ein Überholen eines vorausfahrenden Fahrzeuges, ein Abbiegen nach links oder nach rechts, ein Einparken in eine Parklücke, insbesondere ein Rückwärtsfahren umfassend, ein Passieren lassen eines anderen Verkehrsteilnehmers, welcher eigentlich Vorfahrt hat, usw.

Die Fahrmanöver-Empfehlung kann zum Beispiel ein Bremsen, ein Beschleunigen, ein Konstanthalten der Geschwindigkeit, ein Ausscheren, ein Abbiegen, eine Lenkbewegung, eine Betätigung eines Fahrzeuglichtes, etc. umfassen.

Ausführungsformen der Erfindung ermöglichen ein Kooperieren verschiedener Verkehrsteilnehmer, um eine gegenseitige Behinderung zu vermindern.

Die jeweilige Fahrmanöver-Empfehlung kann ferner auf einer Position und/oder einer Geschwindigkeit und/oder einer Beschleunigung und/oder einer (bisher gefahrenen und/oder zukünftig (z.B. extrapolierten)) Trajektorie zumindest eines der Verkehrsteilnehmer basieren und bestimmt werden und/oder kann ferner basierend auf einer Fahrbahngeometrie bestimmt werden. Dabei kann die Fahrmanöver-Empfehlung kontinuierlich in Abhängigkeit von den sich ändernden Charakteristika der Verkehrsteilnehmerzustände berechnet werden und jeweils an die betreffenden Verkehrsteilnehmer kommuniziert und dort visuell angezeigt werden, insbesondere in der FPK. Damit kann die Fahrmanöver-Empfehlung mit größerer Genauigkeit bestimmt werden, um insbesondere konsistent (gegenseitig verträglich) zwischen den verschiedenen Verkehrsteilnehmern bestimmt zu werden und derart, dass sie auch tatsächlich umsetzbar sind.

Ferner kann der erste und/oder der zweite Verkehrsteilnehmer ein jeweiliges Fahrmanöver gemäß der Anfrage und/oder gemäß der betreffenden Fahrmanöver-Empfehlung durchführen, entweder durch manuelles Steuern des Fahrzeuges oder durch automatisches, autonomes Steuern des Fahrzeuges ohne menschliche Eingriffe.

Erfindungsgemäß erfolgt während einer Durchführung, bei dem ersten und/oder dem zweiten Verkehrsteilnehmer, von jeweiligen Fahrmanövern gemäß der Fahrmanöver-Anfrage und/oder der Fahrmanöver-Empfehlung ein Visualisieren beider Verkehrsteilnehmer in ihren relativen Orientierungen auf einer visuellen Darstellung des Fahrzeugumfelds. Zusätzlich erfolgt erfindungsgemäß auch ein Visualisieren, bei mindestens einem Verkehrsteilnehmer, an den eine Fahrmanöver-Empfehlung signalisiert wurde, die Fahrmanöver-Empfehlung zusammen mit dem Verkehrsteilnehmer, dem eine Fahrmanöver-Empfehlung signalisiert wurde, insbesondere auf der FPK Dadurch kann eine übersichtliche, transparente Signalisierung an jeweilige Führer der Fahrzeuge übermittelt werden. Beispielsweise kann das eigene Fahrzeug in einer zentralen Position dargestellt werden und in einer bestimmten Farbe dargestellt werden, während das Fahrzeug des zweiten Verkehrsteilnehmers in einem nicht zentralen Bereich der Cockpit-Anzeige und/und in einer anderen Farbe, etwa weiß, dargestellt sein kann. Eine Fahrmanöver-Empfehlung kann zum Beispiel durch Pfeile (zum Beispiel zum Abbremsen, Beschleunigen, Abbiegen) visualisiert werden. Die Darstellung kann animiert durchgeführt werden, das heißt die Bewegung des jeweils anderen Verkehrsteilnehmers ist durch eine Veränderung der Position der Darstellung des anderen Verkehrsteilnehmers mit der Zeit ersichtlich. Auch kann ein animiertes Darstellen mit einer Infrastruktur, etwa zusammen mit der Fahrbahn, durchgeführt werden.

Gemäß Ausführungsformen kann auch bei dem ersten und/oder dem zweiten Verkehrsteilnehmer signalisiert werden, insbesondere visuell auf der FPK dargestellt werden, ob ein Fahrmanöver möglich ist oder nicht möglich ist, z.B. durch entsprechendes Einfärben einer befahrbaren bzw. nicht befahrbaren Fläche. Damit kann ein Fahrmanöver vermieden werden, welches beispielsweise zu einer Kollision führen könnte. Durch eine geeignete farbliche Darstellung, etwa eine orange Fläche oder eine rote Fläche könnte angezeigt werden, dass ein bestimmter Bereich im Augenblick nicht befahrbar ist, das entsprechende Fahrmanöver somit nicht möglich ist.

Das Verfahren kann ferner ein Senden von einem der Verkehrsteilnehmer, einer eigenen Position und/oder eines eigenen zukünftigen Fahrmanövers und/oder eines eigenen Fahrzustandes und/oder eigener Fahrlicht-Zustände, an den jeweils anderen Verkehrsteilnehmer umfassen. Damit kann zuverlässiger die jeweilige Fahrmanöver-Empfehlung bestimmt werden und dann demgemäß ein Fahrmanöver durchgeführt werden. Weitere Daten betreffend den Zustand, Bewegungszustand der Verkehrsteilnehmer können ausgetauscht werden.

Das Empfangen der Fahrmanöver-Anfrage kann ein Visualisieren bei dem zweiten Verkehrsteilnehmer der Fahrmanöver-Anfrage auf einer Anzeigevorrichtung umfassen. Dieses Visualisieren kann insbesondere auch eine gewünschte Trajektorie des anfragenden Verkehrsteilnehmers darstellen bzw. umfassen. Damit kann eine einfach verständliche Darstellung bereitgestellt werden, was eine Sicherheit des Verfahrens und eine Zuverlässigkeit erhöhen kann.

Das Annehmen der Fahrmanöver-Anfrage kann bei dem zweiten Verkehrsteilnehmer ein manuelles Betätigen eines Schaltmechanismus (zum Beispiel eines Knopfes, eines Berührschirms) und/oder eine Spracheingabe und/oder ein Betätigen eines Bremshebels (zum Beispiel Bremspedal) und/oder ein automatisches Annehmen durch eine automatische Fahrsteuerung umfassen. Wie ein Annehmen der Fahrmanöver-Anfrage ausgebildet ist, kann in einer entsprechenden Vorrichtung konfigurierbar sein und kann gemäß den Wünschen des Fahrers gewählt werden. Nach dem Annehmen der Fahrmanöver-Anfrage kann ein Anzeigesystem, insbesondere eine FPK, in einen Kooperationskontext umschalten, den der Fahrer aufgrund eines geänderten Layouts leicht erkennen kann, um für ihn eine Verbindung bzw. Kooperation mit einem anderen Verkehrsteilnehmer transparent zu signalisieren.

Das Annehmen der Fahrmanöver-Anfrage umfasst bei dem zweiten Verkehrsteilnehmer ein Senden eines Antwortsignals an den ersten Verkehrsteilnehmer. Das Senden des Antwortsignals kann mit einer gleichen Technologie oder mit einer verschiedenen Technologie durchgeführt werden, mit dem die Fahrmanöver-Anfrage zunächst von dem ersten Teilnehmer gesendet worden ist. Das Senden des Antwortsignals kann direkt an den ersten Verkehrsteilnehmer oder indirekt über ein oder mehrere Zwischeninstanzen oder Server bzw. Empfangs- und Sendemasten durchgeführt werden.

Das Annehmen der Fahrmanöver-Anfrage kann bei dem ersten Verkehrsteilnehmer ein Signalisieren und/oder Visualisieren der Annahme und/oder Anzeigen der Richtung, in der sich der zweite Verkehrsteilnehmer befindet, umfassen. Damit kann der Fahrer sich bereits dahin orientieren, wo sich der Kooperationspartner befindet. Ferner kann er sich darauf einstellen, dass seine Absicht, ein Fahrmanöver auszuführen, von einem anderen Verkehrsteilnehmer unterstützt wird.

Es wird bemerkt, dass Merkmale, welche individuell oder in irgendeiner Kombination im Zusammenhang mit einem Verfahren zur Interaktion zwischen einem ersten und einem zweiten Verkehrsteilnehmer beschrieben, bereitgestellt oder angewendet worden sind, ebenso, individuell oder in irgendeiner Kombination, auf eine Vorrichtung für einen ersten Verkehrsteilnehmer zur Interaktion mit einem zweiten Verkehrsteilnehmer anwendbar sind gemäß Ausführungsformen der vorliegenden Erfindung.

Gemäß einer Ausführungsform der vorliegenden Erfindung ist eine Vorrichtung für einen ersten Verkehrsteilnehmer zur Interaktion mit einem zweiten Verkehrsteilnehmer bereitgestellt. Dabei weist die Vorrichtung einen Sender zum Senden einer Fahrmanöver-Anfrage von dem ersten Verkehrsteilnehmer in seine Umgebung (ferner insbesondere einen Empfänger zum Empfangen einer Antwort von einem anderen Verkehrsteilnehmer) und eine Anzeigevorrichtung zum Signalisieren des Annehmens der Fahrmanöver-Anfrage nach Empfangen eines für die Fahrmanöver-Anfrage indikativen Anfragesignals und Annehmen der Fahrmanöver-Anfrage bei dem zweiten Verkehrsteilnehmer auf.

Ferner stellen nicht durch die Ansprüche beanspruchte ein Fahrzeug, etwa PKW, LKW oder Motorrad bereit, welche eine Vorrichtung für einen ersten Verkehrsteilnehmer zur Interaktion mit einem zweiten Verkehrsteilnehmer umfassen.

Ferner stellen Ausführungsformen der vorliegenden Erfindung ein System zur Interaktion zwischen einem ersten und einem zweiten Verkehrsteilnehmer gemäß Anspruch 11 bereit.

Verkehrsteilnehmer, welche die Fahrmanöver-Anfrage nicht annehmen wollen, können dies durch Untätigkeit signalisieren. Eine Ablehnung kann angenommen werden, wenn ein bestimmter Verkehrsteilnehmer innerhalb eines bestimmten Zeitintervalls auf die Fahrmanöver-Anfrage nicht positiv oder gar nicht antwortet.

Für das Signalisieren, Visualisieren und/oder Anzeigen der Fahrmanöver-Anfrage, des Annehmens dieser, der Fahrmänover-Empfehlung oder anderer Informationen für einen oder beide der Verkehrsteilnehmer kann ein Head-up-Display (HUD; wörtlich: "Kopf-oben-Anzeige"), z.B. im Innenraum vor der Windschutzscheibe installiert, verwendet werden. Ein Head-up-Display ist ein Anzeigesystem, bei dem der Fahrer seine Kopfhaltung bzw. Blickrichtung beibehalten kann, weil die Informationen in sein Sichtfeld in einen ansonsten transparenten Schirm projiziert werden können. Head-up-Displays bestehen im Allgemeinen aus einer bildgebenden Einheit, einem Optikmodul und einer Projektionsfläche. Die bildgebende Einheit erzeugt das Bild. Das Optikmodul mit Kollimator und Umlenkung leitet das Bild auf die Projektionsfläche. Diese Fläche kann eine spiegelnde, lichtdurchlässige Scheibe umfassen. Der Benutzer des Frontscheibenprojektors sieht also die gespiegelten Informationen der bildgebenden Einheit und gleichzeitig die reale Welt hinter der Scheibe. Andere

Anzeigesysteme können verwendet werden, wie etwa LED-Schirme, LCD-Schirme, IPS-Schirme, Plasma-Schirme etc., die z.B. Cockpit integriert sein können.

Ausführungsformen der vorliegenden Erfindung werden nun mit Bezug auf die beiliegenden Zeichnungen erläutert. Die Erfindung ist nicht auf die illustrierten oder beschriebenen Ausführungsformen beschränkt.
Fig. 1 illustriert in einer schematischen Darstellung eine Verkehrssituation, auf welche Ausführungsformen der vorliegenden Erfindung angewendet werden können;
Fig. 2 illustriert eine Anzeigevorrichtung 9 in einem ersten Fahrzeugs A gemäß einer Ausführungsform der vorliegenden Erfindung während eines Verfahrens zur Interaktion zwischen Verkehrsteilnehmern gemäß einer Ausführungsform der vorliegenden Erfindung;
Fig. 3 illustriert eine Anzeigevorrichtung 27 eines zweiten Fahrzeugs B während eines anderen Verfahrensschrittes eines Verfahrens gemäß einer Ausführungsform der vorliegenden Erfindung;
Fig. 4 illustriert eine Anzeigevorrichtung 27 eines zweiten Fahrzeugs B gemäß einer Ausführungsform der vorliegenden Erfindung während eines weiteren Verfahrensschrittes gemäß einer Ausführungsform der vorliegenden Erfindung;
Fig. 5 illustriert eine Visualisierung eines Fahrzeugs, wie sie in Ausführungsformen gemäß der vorliegenden Erfindung angewendet werden kann;
Fig. 6 illustriert eine Anzeigevorrichtung 9 während eines Verfahrensschrittes gemäß einer Ausführungsform der vorliegenden Erfindung;
Fig. 7 illustriert schematisch einen späteren Zeitpunkt der in Fig. 1 illustrierten Verkehrssituation;
Fig. 8 illustriert eine Anzeigevorrichtung 27 eines zweiten Fahrzeugs B gemäß einer Ausführungsform der vorliegenden Erfindung während eines Verfahrensschrittes gemäß einer Ausführungsform der vorliegenden Erfindung;
Fig. 9 illustriert eine alternative Darstellung zu der in Fig. 8 gezeigten Darstellung;
Fig. 10 illustriert eine Anzeigevorrichtung 27 eines zweiten Fahrzeugs B gemäß einer Ausführungsform der vorliegenden Erfindung zu einem weiteren Verfahrensschritt gemäß einer Ausführungsform der vorliegenden Erfindung;
Fig. 11 illustriert ein Ablaufdiagramm eines Verfahrens gemäß einer Ausführungsform der vorliegenden Erfindung;
Fig. 12 illustriert eine Vorrichtung für einen ersten Verkehrsteilnehmer zur Interaktion mit einem zweiten Verkehrsteilnehmer gemäß einer Ausführungsform der vorliegenden Erfindung und
Fig. 13 illustriert ein Fahrzeug gemäß einer Ausführungsform der vorliegenden Erfindung, welches die in Fig. 12 illustrierte Vorrichtung umfasst.

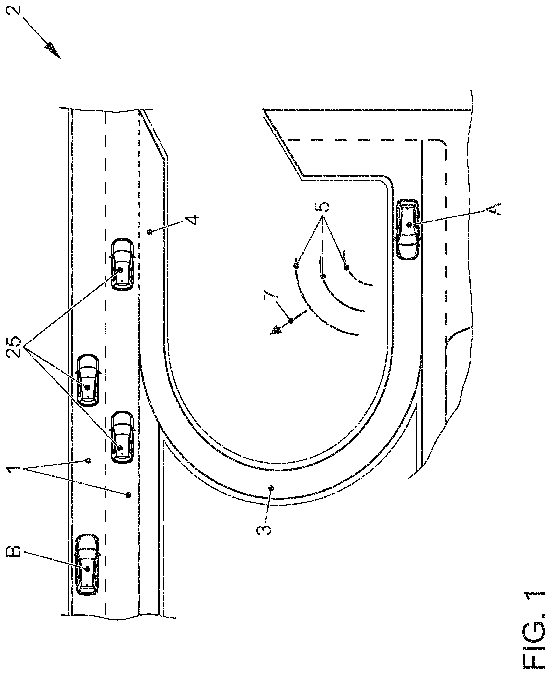

Zur Erläuterung eines Verfahrens zur Interaktion zwischen einem ersten und einem zweiten Verkehrsteilnehmer gemäß einer Ausführungsform der vorliegenden Erfindung wird im Folgenden eine Auffahr- und Einfädelsituation 2 auf einer Autobahn betrachtet, wie sie in Fig. 1 schematisch illustriert ist. Fig. 1 zeigt dabei eine Draufsicht eines Teils einer Autobahn mit Fahrspuren 1, wo eine Auffahrt 3 auf die Autobahn 1 befindlich ist. Ein Fahrzeug B repräsentiert einen zweiten Verkehrsteilnehmer, welcher bereits auf der Autobahn fährt. Ein Fahrzeug A repräsentiert einen ersten Verkehrsteilnehmer, welcher auf der Auffahrt 3 befindlich ist, und auf die Fahrspuren 1 der Autobahn einfahren möchte. Bei dem Erreichen der Auffahrt 3 sendet das Fahrzeug A gemäß einer Ausführungsform der vorliegenden Erfindung eine Fahrmanöver-Anfrage 7 (eine generelle Anfrage) an den umliegenden Verkehr aus, die durch Funkwellen 5 übermittelt wird. Die Funkwellen 5 kodieren die Fahrmanöver-Anfrage 7, die in alle Richtungen von dem Fahrzeug A ausgesendet werden. Damit sucht das Fahrzeug A (erster Verkehrsteilnehmer) einen Kooperationspartner, der den Einfädelprozess unterstützen kann.

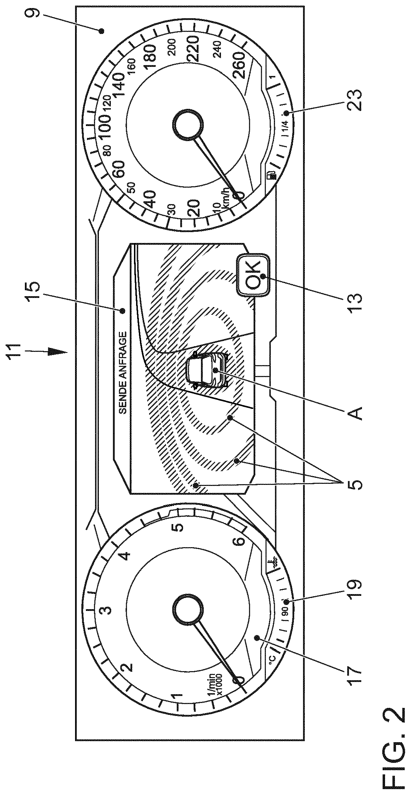

Um den Fahrer des Fahrzeuges A über die gesendete Fahrmanöver-Anfrage 7 zu informieren, ist eine FPK-basierte Anzeige vorgesehen, wie in Abbildung 2 illustriert ist. Fig. 2 zeigt dabei eine Anzeigevorrichtung 9 innerhalb des Fahrzeuges A (erster Verkehrsteilnehmer), wenn die Fahrmanöver-Anfrage 7 ausgesendet wird. Die Fahrmanöver-Anfrage 7 beinhaltet die Absicht des Fahrzeuges A, auf die Autobahn 1 einzufahren, was eine Unterstützung zum Einfädeln durch einen anderen Verkehrsteilnehmer erfordert. Die Darstellung auf der Anzeigevorrichtung 9 im Fahrzeug A umfasst eine spezielle Visualisierung 11 in einem zentralen Bereich, wobei das eigene Fahrzeug (Fahrzeug A) im Zentrum von hinten dargestellt ist. Kreisförmig von dem Fahrzeug A sind Wellen 5 angedeutet, welche die Fahrmanöver-Anfrage 7 transportieren. Die Darstellung 11 kann als ein Pop-Up ausgeführt sein und den zuvor angezeigten Inhalt der FPK überblenden. Durch Betätigen des "OK" Feldes 13 kann diese Information quittiert werden, sodass der zuvor angezeigte Inhalt (zum Beispiel Navigationskontext) wiederum angezeigt werden kann. Das Quittieren kann durch einen Lenkradknopf oder einen Knopf oder eine Schaltfläche auf einem Berührschirm ausgeführt werden. Alternativ kann die Darstellung 11 nach einer gewissen Zeitspanne wieder auf den ursprünglich dargestellten Inhalt wechseln. Die Visualisierung kann durch eine wellenförmig Ausbreitung (animiert oder als stillstehendes Bild) vorgenommen werden, um die Ausbreitung bzw. Aussendung der Fahrmanöver-Anfrage 7 anzudeuten. Ferner kann ein Fließtext 15 (oder ein feststehender Text) über die Versendung der Anfrage 7 informieren. Dieser Vorgang (Versenden der Anfrage) kann ebenso durch die Anzeige eines einfachen LED-Symbols veranschaulicht werden.

Die Anzeigevorrichtung 9 umfasst ferner einen Drehzahlmesser 17, einen Wassertemperaturanzeiger 19, einen Geschwindigkeitsanzeiger 21, sowie eine Tankfüllstandsanzeige 23. Die Anzeigevorrichtung 9 kann weitere Elemente umfassen und kann weitere Informationen je nach Bedarf in dem zentralen Bereich 11 darstellen.

Die Fahrmanöver-Anfrage 7 kann von einer Mehrzahl von Verkehrsteilnehmern 25 empfangen werden (siehe Fig. 1). Nicht alle dieser Verkehrsteilnehmer müssen jedoch auf diese Anfrage eingehen und beantworten somit die Anfrage 7 nicht. Damit scheiden diese anderen Verkehrsteilnehmer 25 als Kooperationspartner des Fahrzeuges A aus. Die Fahrmanöver-Anfrage 7 wird auch von dem Fahrzeug B empfangen.

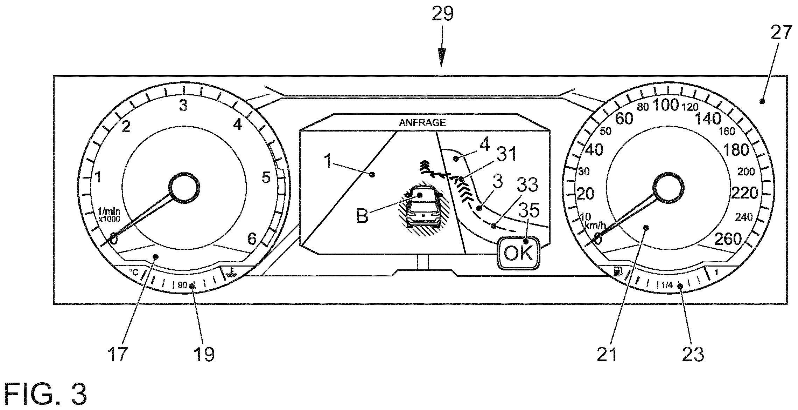

Fig. 3 illustriert eine Anzeigevorrichtung 27 des Fahrzeuges B (zweiter Verkehrsteilnehmer) zu dem Zeitpunkt, als eine Darstellung 29 in dem zentralen Bereich der Anzeigevorrichtung 27 erscheint, welche Auskunft über eine Anfrage eines Verkehrsteilnehmers gibt. Auch der Fahrer des Fahrzeuges B kann, wie in Fig. 3 illustriert ist, durch ein Pop-Up über die Anfrage von dem Fahrzeug A informiert werden. Hierbei befindet sich das eigene Fahrzeug in der Bildschirmmitte, d.h. das Fahrzeug B befindet sich in der Bildschirmmitte der Darstellung 29. Zudem sind die Fahrspuren 1 der Autobahn und die Auffahrt 3 bzw. der Beschleunigungsstreifen 4 angedeutet. Zudem ist die gewünschte Trajektorie 31 des anfragenden Fahrzeuges A in Form einer farbigen (zum Beispiel orangefarbenen) Pfeillinie 31 dargestellt. Der Weg bis zu dieser Einfädel-Trajektorie ist als einfache Punktlinie 33 dargestellt. Für die Bestätigung dieser Anfrage sind verschiedene Wege möglich. Zum Beispiel kann durch eine explizite Betätigung des OK-Tasters 35 die Anfrage angenommen werden. Alternativ kann zum Beispiel ein Betätigen der Bremse dazu führen, dass die Anfrage angenommen wird. Falls das Fahrzeug B innerhalb einer vorbestimmten Zeitspanne nicht auf die Anfrage reagiert, wird entweder gar nichts an das Fahrzeug A gesendet oder es wird eine Absage an das Fahrzeug A gesendet. Die Darstellung 29 ist danach nicht mehr sichtbar. In dem Falle einer positiven Bestätigung wird der bisher angezeigte FPK-Kontext (z. B. Navigation oder Media) automatisch durch den Kooperationskontext ersetzt.

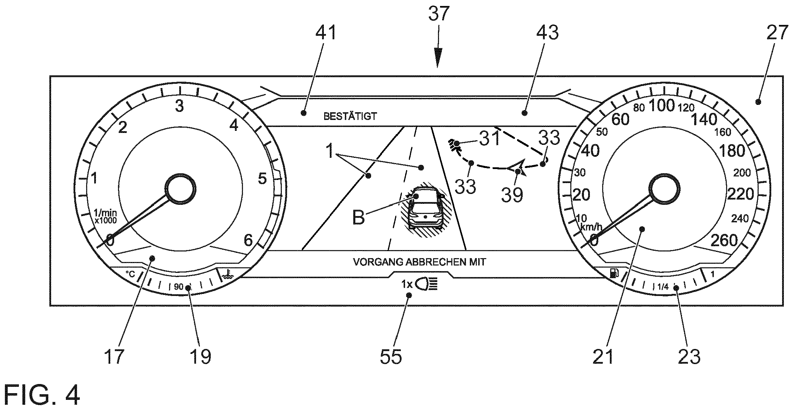

Fig. 4 illustriert die Anzeigevorrichtung 27 des Fahrzeuges B, nachdem die Anfrage des Fahrzeuges A angenommen worden ist. Wiederum befindet sich das eigene Fahrzeug B im Zentrum der Darstellung 37 in der Mitte der Anzeigevorrichtung 27. Die gesamte Umwelt, d.h. die digital bekannte oder durch Sensoren bzw. Datenauswertung erkannte Umwelt, wird innerhalb einer dreidimensionalen Welt bzw. Umgebung dargestellt. Die Darstellung umfasst dabei sowohl Straßengeometrien und Infrastrukturen, als auch physische Charakteristika der Umwelt, sowie auch weitere Verkehrsteilnehmer und deren Eigenschaften und Absichten. Befinden sich andere Verkehrsteilnehmer noch außerhalb des direkten Interaktionsbereichs, sind aber für die Interaktion von Bedeutung, werden im Sinne wenig komplexer Darstellungen, vereinfachte Visualisierungen verwendet. Als ein Beispiel wird das Fahrzeug A durch einen weißen Pfeil 39 dargestellt. Der obere Teil 31 zeigt die bereits mit Bezug auf Fig. 3 beschriebene Pfeillinie als voraussichtliche Trajektorie. Die bereits zurückgelegte Strecke ist durch die gepunktete Linie 33 illustriert. Der Horizont der Darstellung 37 kann für textuelle Mitteilungen und insbesondere für kooperationsbezogene Statusmeldungen verwendet werden. Insbesondere zeigt ein Anzeigefeld 41 in der Darstellung 37 an, dass die Anfrage bestätigt wurde. Das Informationsfeld 43 zeigt an, um welchen Typ eines Fahrzeuges es sich bei dem Fahrzeug A handelt. Über die in der Darstellung 37 gezeigten Informationen hinaus können weitere Handlungsempfehlungen und Trajektorien bzw. Intentionen anderer Fahrzeuge angezeigt werden.

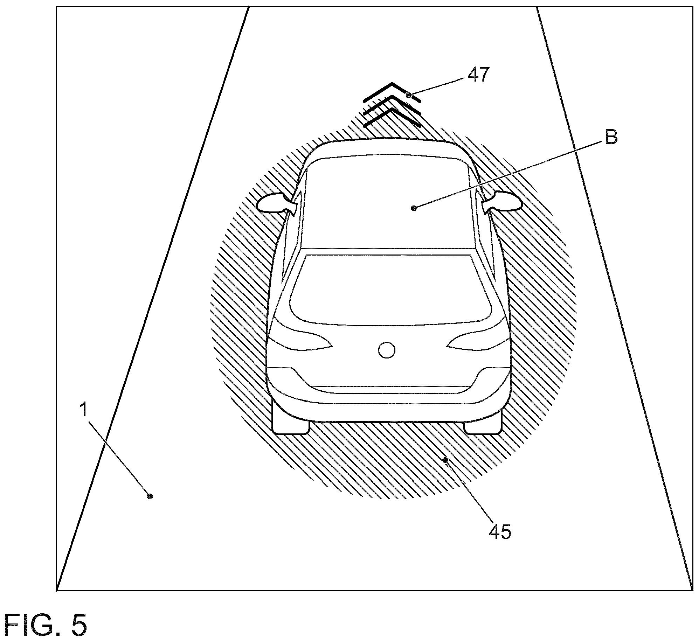

Das eigene Fahrzeug kann dabei durch grafische Aspekte ergänzt werden, wie im größeren Detail in Fig. 5 dargestellt ist. Eine zum Beispiel blau-transparente Fläche 45 unterhalb des Fahrzeugs B kann zum Beispiel die eingegangene Kooperation mit einem anderen Fahrzeug kennzeichnen. Zum anderen kann eine Pfeillinie 47 eine Handlungsempfehlung (auch Fahrmanöver-Empfehlung genannt) anzeigen. Im dargestellten Beispiel kann die Folge von nach vorne weisenden Pfeilen 47 eine Empfehlung einer Beschleunigung anzeigen. Fahrmanöver-Empfehlungen können auf verschiedene Weise dem Fahrer dargestellt werden. Die Folge von Pfeilen 47 kann animiert dargestellt werden.

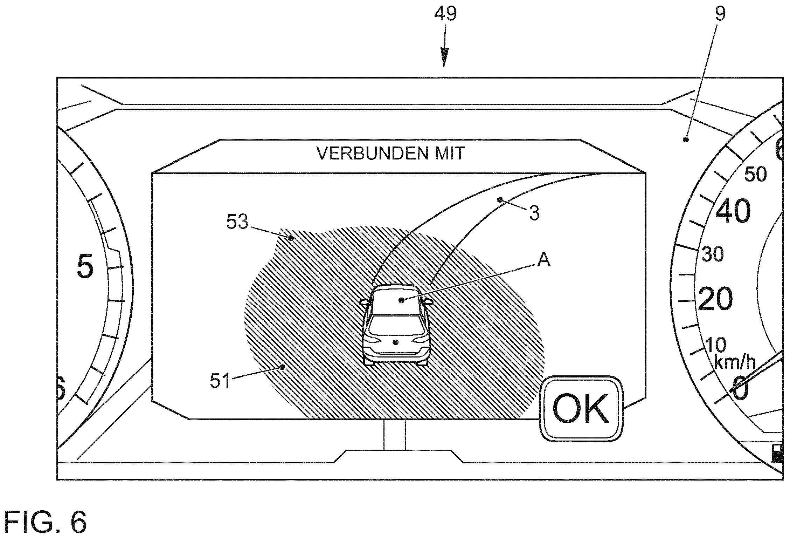

Fig. 6 illustriert wiederum die Anzeigevorrichtung 9 des Fahrzeuges A, jedoch zu einem Zeitpunkt, nachdem das Fahrzeug B die Fahrmanöver-Anfrage 7 angenommen hat, sodass auf der Anzeigevorrichtung 9 eine Darstellung 49 erfolgt. Damit wird auch dem Fahrer des Fahrzeugs A die Bestätigung der Anfrage visualisiert. Hierfür kommen sowohl vollflächige Anzeigen als auch Pop-Up-Darstellungen infrage. Ferner können die bereits oben beschriebenen transparenten Flächen zum Einsatz kommen, die erst dann erscheinen, wenn eine Kooperation eingegangen ist bzw. bestätigt wurde. Im vorliegenden Beispiel der Darstellung 49 ist eine transparente Fläche 51 um das Fahrzeug A dargestellt und ein Pfeil 53 zeigt die Richtung desjenigen Verkehrsteilnehmers, welcher die Anfrage angenommen hat.

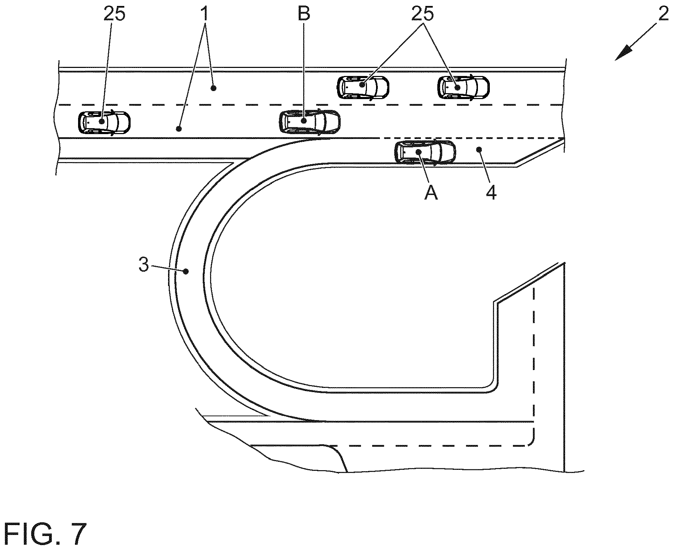

Inzwischen haben sich Positionen des Fahrzeugs A und des Fahrzeugs B in Positionen bewegt, wie in Abbildung 7 dargestellt ist. Befinden sich die Fahrzeuge in direktem Interaktionsbereich, wie in Fig. 7 illustriert ist, könne beide Fahrzeuge in FPK-Inhalten des jeweils anderen angezeigt werden. Inzwischen befindet sich also das Fahrzeug A auf dem Beschleunigungsstreifen 4 der Autobahn 1.

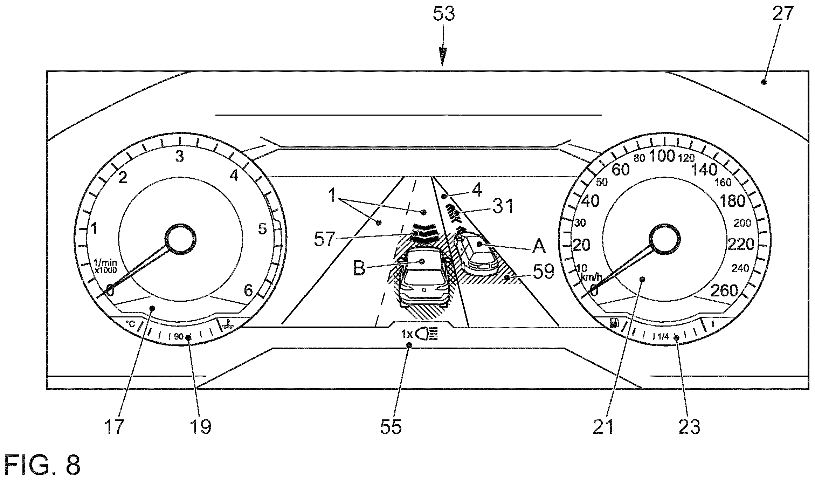

Fig. 8 illustriert die Anzeigevorrichtung 27 des Fahrzeuges B zu einem Zeitpunkt, der dem in Fig. 7 illustrierten Zeitpunkt entspricht. Hierbei ist zunächst die digitale Repräsentation des Fahrzeugs A auf dem rechten Fahrstreifen 4 zu sehen. Zur besseren Differenzierbarkeit von eigenem Fahrzeug B können die Kooperationspartner mit weniger Detailtiefe, hier zum Beispiel in Weiß dargestellt werden. Mit dem zweiten bzw. mit weiteren Fahrzeugen können zudem noch zusätzlich Informationen gegeben werden. Auch hierbei kann eine Pfeillinie 31 zum Einsatz kommen, die sich in Form, Länge und Farbe jedoch von der des eigenen Fahrzeugs unterscheiden kann. Mit der Trajektorie des anderen Fahrzeugs können dessen aktuelles Beschleunigungsverhalten und dessen voraussichtliche Querführung bzw. dessen aktuelle Manöver visualisiert werden. Durch Betätigung oder durch einmalige Betätigung des Fernlichts kann der Vorgang abgebrochen werden, wie in dem Informationsfeld 55 angedeutet ist.

In Fahrzeug B wird zum Zeitpunkt, der in Fig. 7 illustriert ist, die Darstellung 53 auf der Anzeigevorrichtung 27 im Zentrum dargeboten. Die umgekehrten, nach hinten gerichteten Pfeile 57 vor dem eigenen Fahrzeug B zeigen eine Fahrmanöver-Empfehlung für das eigene Fahrzeug B an, hier eine Bremsempfehlung. Die Fläche 59 unter und neben dem Fahrzeug A zeigt die benötigte Fläche zum Fahrstreifenwechsel (Manöverfläche) an. Die Fläche 59 kann zum Beispiel Orange angefärbt sein und anzeigen, dass ein Spurwechsel aktuell nicht möglich ist, sodass ein Manöver eines Spurwechselns nicht möglich ist. Insbesondere repräsentiert die Fläche 59, die unter dem Fahrzeug A bis auf die benachbarte Spur verläuft, den zum Fahrseitenwechsel benötigten Raum ("Manöverfläche"). Da das Fahrzeug B sich noch neben dem Fahrzeug A befindet, ist ein Fahrstreifenwechsel noch nicht möglich, weswegen die Fläche orange eingefärbt ist. Die rote Pfeillinie 57 vor dem Fahrzeug A repräsentiert zudem eine Bremsempfehlung.

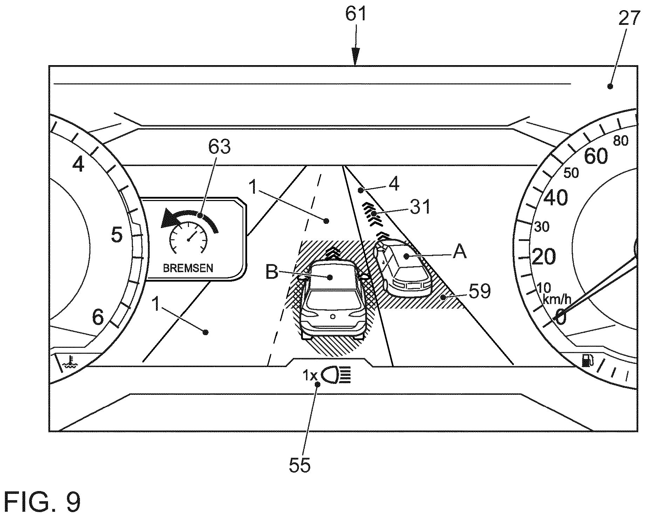

Alternativ können Bremsempfehlungen auch durch die Anzeige von kleineren "Widgets" vorgenommen werden, die eine entsprechende Symbolik aufweisen, wie in einer alternativen Darstellung 61 der Anzeigevorrichtung des Fahrzeuges B zu einem gleichen Zeitpunkt durch das Informationsfeld 63 in Fig. 9 angezeigt ist. Durch die hintereinanderliegenden Widgets kann zudem auch eine zeitliche Abfolge der Empfehlungen bzw. noch anstehende oder noch nicht aktuelle Empfehlungen dargestellt werden.

Neben Fahrmanöver-Empfehlungen an das Fahrzeug B können auch mit den an Fahrzeug B gegebenen Empfehlungen konsistente Fahrmanöver-Empfehlungen an das Fahrzeug A ausgegeben werden. Die Empfehlungen können von identischen Prozessoren bzw. Logiken in den Fahrzeugen A und B konsistent bestimmt werden oder können alternativ durch eine zentrale Instanz oder einen Masterprozessor in einem der Verkehrsteilnehmer bestimmt werden. Damit kann sichergestellt werden, dass die Empfehlungen an die verschiedenen Verkehrsteilnehmer nicht zu unerwünschten Fahrsituationen, etwa Kollisionen führen.

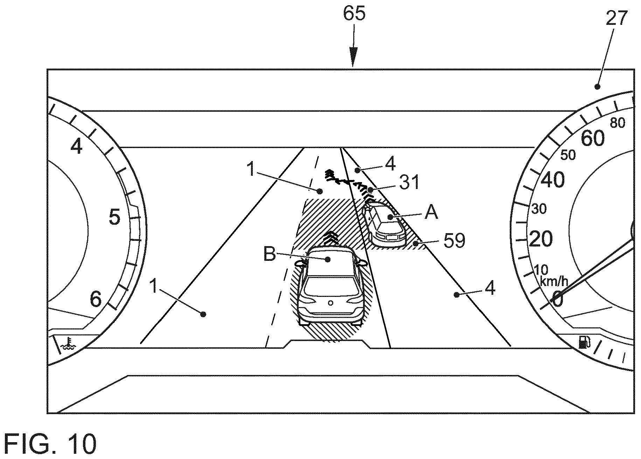

Im weiteren zeitlichen Verlauf ändert sich die Position des Fahrzeuges A, wie es kontinuierlich auf der Anzeigevorrichtung 27 des Fahrzeuges B dargestellt ist, etwa in einer Darstellung 65 in Fig. 10.

Die Darstellung 65 zeigt dabei einen bevorstehenden Fahrstreifenwechsel des Fahrzeuges A von dem Beschleunigungsstreifen 4 auf den Fahrstreifen 1. Da das Fahrzeug A sich erst sehr kurz außerhalb der Manöverfläche 59 befindet, ist dies noch als gesperrt gekennzeichnet und somit orange eingefärbt. In einem nächsten Schritt würde diese Fläche 59 entweder eine andere Farbgebung erhalten oder nicht mehr dargestellt werden. Daraufhin würde Fahrzeug A auf die Autobahn auffahren.

Bei allen dargestellten Fahrzeugen (eigenes und alle anderen, die "digital" erkannt werden können) können zudem die Bremslichter und gegebenenfalls auch die übrigen Lichtsignale entsprechend der realen Verwendung angezeigt werden. Darüber hinaus kann anhand der grafischen Darstellung noch unterschieden werden, auf Basis welcher Informationen die Fahrzeuge in der digitalen Umwelt dargestellt werden. So können Fahrzeuge, die aufgrund der V2V-Technologie in die Darstellung aufgenommen wurden, zum Beispiel wie oben dargestellt, mit vollen Flächen und in relativ hohem Detailgrad dargestellt werden. Fahrzeuge, die nur durch bordeigene Sensorik (Radar oder Ultraschall) erfasst wurden, könnten auf eine andere Weise dargestellt werden (z. B. halbtransparent und oder durch eine Standardform). Darüber hinaus könnten Fahrzeuge, die aufgrund sehr unsicherer Informationen dargestellt werden, in einer noch weiter reduzierten Form visualisiert werden. Als Basis für diese sehr unsichere Kategorie können zu Beispiel aufgefangenen Bluetooth- oder WLAN-Signale dienen, die nicht zum Zwecke der Identifikation durch andere Verkehrsteilnehmer ausgesandt werden. Hierzu kommen auch Hitzesignaturen infrage, die durch Infrarotsensorik ermittelt werden können.

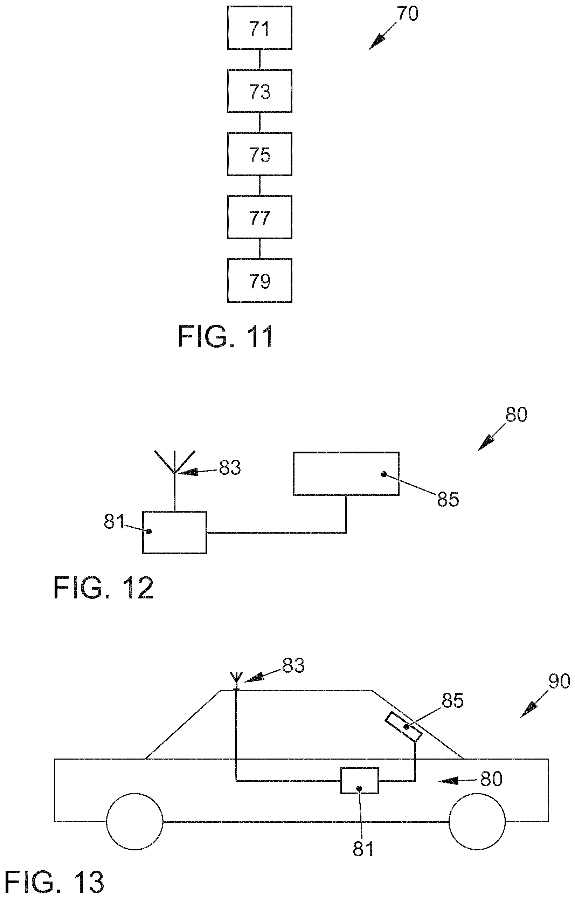

Fig. 11 illustriert einen Ablauf eines Verfahrens 70 zur Interaktion zwischen einem ersten und einem zweiten Verkehrsteilnehmer gemäß einer Ausführungsform der vorliegenden Erfindung. In einem Verfahrensschritt 71 wird eine Fahrmanöver-Anfrage von dem ersten Verkehrsteilnehmer an seine Umgebung gesendet. In einem Verfahrensschritt 73 wird ein für die Fahrmanöver-Anfrage indikatives Anfragesignal bei dem zweiten Verkehrsteilnehmer empfangen. Bei einem Verfahrensschritt 75 wird bei dem zweiten Verkehrsteilnehmer die Fahrmanöver-Anfrage angenommen. Bei einem Verfahrensschritt 77 wird das Annehmen der Fahrmanöver-Anfrage bei dem ersten Verkehrsteilnehmer signalisiert und bei einem Verfahrensschritt 79 wird eine jeweils basierend auf der Fahrmanöver-Anfrage bestimmte Fahrmanöver-Empfehlung an den ersten und/oder den zweiten Verkehrsteilnehmer signalisiert.

Fig. 12 illustriert schematisch eine Vorrichtung 80 für einen ersten Verkehrsteilnehmer zur Interaktion mit einem zweiten Verkehrsteilnehmer. Die Vorrichtung 8 weist einen Sender 81 mit einer Antenne 83 zum Senden einer Fahrmanöver-Anfrage von dem ersten Verkehrsteilnehmer in seine Umgebung auf. Ferner weist die Vorrichtung 80 eine Anzeigevorrichtung 85 zum Signalisieren des Annehmens der Fahrmanöver-Anfrage nach Empfangen eines für die Fahrmanöver-Anfrage indikativen Anfragesignals und Annehmen der Fahrmanöver-Anfrage bei dem zweiten Verkehrsteilnehmer auf.

Fig. 13 illustriert schematisch ein Fahrzeug 90 gemäß einer Ausführungsform der vorliegenden Erfindung, welches eine Vorrichtung 80, wie sie in Fig. 12 illustriert ist, umfasst.

### Bezugszeichenliste

1 Autobahnfahrstreifen
3 Auffahrt
4 Beschleunigungsstreifen
5 Elektromagnetische Wellen
7 Fahrmanöver-Anfrage
A Erster Verkehrsteilnehmer
B Zweiter Verkehrsteilnehmer
9 Anzeigevorrichtung des ersten Verkehrsteilnehmers 11 Zentrale Darstellung
13 Bestätigung-Berührfläche
15 Textuelle Information
17 Drehzahlmesser
19 Temperaturmesser
21 Geschwindigkeitsmesser
23 Tankfüllanzeige
27 Anzeigevorrichtung des zweiten Verkehrsteilnehmers
29, 37, 53, 61 Darstellungen auf der Anzeigevorrichtung des zweiten Verkehrsteilnehmers
31 Zukünftige Trajektorie
33 Bisherige Trajektorie
35 Bestätigungsfläche
41, 43 Textuelle Informationsflächen
39 Position des Fahrzeuges
45 Transparente Flächen
47 Fahrmanöver-Empfehlung einer Beschleunigung
51 Kooperation anzeigende transparente Fläche
53 Richtung zum Kooperationspartner
49, 11 Darstellungen auf der Anzeigevorrichtung
des ersten Verkehrsteilnehmers
63 Symbol einer Bremsempfehlung
59 Manöverfläche
70 Verfahren
71, 73, 75, 77, 79 Verfahrensschritte
80 Vorrichtung für einen ersten Verkehrsteilnehmer zur Interaktion mit einem zweiten Verkehrsteilnehmer
81 Sender
83 Antenne
85 Anzeigevorrichtung
90 Fahrzeug

## Patentansprüche

1. Verfahren zur Interaktion zwischen einem ersten (A) und einem zweiten Verkehrsteilnehmer (B), aufweisend:
- Senden (71) einer Fahrmanöver-Anfrage (7) von dem ersten Verkehrsteilnehmer (A) in seine Umgebung mittels eines Senders;
- Empfangen (73) eines für die Fahrmanöver-Anfrage (7) indikativen Anfragesignals bei dem zweiten Verkehrsteilnehmer (B) mittels eines Empfängers;
- Annehmen (75) der Fahrmanöver-Anfrage (7) bei dem zweiten Verkehrsteilnehmer (B) mit einem Mittel zum Annehmen der Fahrmanöver-Anfrage;
- Senden eines Annehmen-Antwortsignals an den ersten Verkehrsteilnehmer (A) seitens des zweiten Verkehrsteilnehmers (B) mittels eines Senders;
- Signalisieren (77) des Annehmens der Fahrmanöver-Anfrage (7) bei dem ersten Verkehrsteilnehmer (A) mittels einer Anzeigevorrichtung (9); **gekennzeichnet durch** die weiteren Schritte:
- Berechnen einer basierend auf der Fahrmanöver-Anfrage (7) bestimmten Fahrmanöver-Empfehlung (47, 57) nach der Annahme seitens des zweiten Verkehrsteilnehmers (B) mittels eines Prozessors bei dem zweiten Verkehrsteilnehmer (B) und Signalisieren (79) der Fahrmanöver-Empfehlung (47, 57) mittels einer Anzeigevorrichtung (27) bei dem zweiten Verkehrsteilnehmer (B) und Berechnen einer mit der an den zweiten Verkehrsteilnehmer (B) gegebenen Fahrmanöver-Empfehlung konsistenten Fahrmanöver-Empfehlung für den ersten Verkehrsteilnehmer (A) mittels eines Prozessors bei dem ersten Verkehrsteilnehmer (A) und Signalisieren (79) der Fahrmanöver-Empfehlung (47, 57) mittels der Anzeigevorrichtung (9) bei dem ersten Verkehrsteilnehmer (A); und
- gemeinsames Anzeigen mittels der Anzeigevorrichtung (9) bei dem ersten Verkehrsteilnehmer (A) und/oder der Anzeigevorrichtung bei dem zweiten Verkehrsteilnehmer (B) von visuellen Darstellungen beider Verkehrsteilnehmer (A, B) in ihren relativen Orientierungen auf einer visuellen Darstellung des Fahrzeugumfelds während einer Durchführung von jeweiligen Fahrmanövern gemäß der Anfrage (7) und/oder der jeweiligen Fahrmanöver-Empfehlung (47, 57).

2. Verfahren gemäß Anspruch 1, wobei bei einer durch die beiden Verkehrsteilnehmer (A, B) eingegangenen Kooperation diese Kooperation bei mindestens einer der visuellen Darstellungen beider Verkehrsteilnehmer (A, B) visuell gekennzeichnet wird.

3. Verfahren gemäß Anspruch 1 oder 2, wobei die jeweilige Fahrmanöver-Empfehlung (47, 57) ferner basierend auf einer Position und/oder einer Geschwindigkeit und/oder Beschleunigung und/oder Trajektorie zumindest eines der Verkehrsteilnehmer (A, B) und/oder einer Fahrbahngeometrie bestimmt wird.

4. Verfahren gemäß einem der vorangehenden Ansprüche, ferner aufweisend:
Signalisieren (59), bei dem ersten (A) und/oder dem zweiten Verkehrsteilnehmer (B), ob ein Fahrmanöver möglich ist oder nicht möglich ist.

5. Verfahren gemäß einem der vorangehenden Ansprüche, ferner aufweisend:
Senden, von einem der Verkehrsteilnehmer (A, B), einer eigenen Position und/oder eines eigenen zukünftigen Fahrmanövers und/oder eines eigenen Fahrzustandes und/oder eigener Fahrlicht-Zustände, an den jeweils anderen Verkehrsteilnehmer.

6. Verfahren gemäß einem der vorangehenden Ansprüche, wobei das Empfangen der Fahrmanöver-Anfrage (7) umfasst:
Visualisieren (29), bei dem zweiten Verkehrsteilnehmer (B), der Fahrmanöver-Anfrage (7) auf der Anzeigevorrichtung (27).

7. Verfahren gemäß einem der vorangehenden Ansprüche, wobei das Annehmen der Fahrmanöver-Anfrage umfasst, bei dem zweiten Verkehrsteilnehmer:
Manuelles Betätigen eines Schaltmechanismus (35) und/oder Spracheingabe und/oder Betätigen eines Bremshebels und/oder automatisches Annehmen durch eine automatische Fahrsteuerung.

8. Verfahren gemäß einem der vorangehenden Ansprüche, wobei das Annehmen der Fahrmanöver-Anfrage umfasst, bei dem ersten Verkehrsteilnehmer (A):
Signalisieren (49) und/oder Visualisieren der Annahme und/oder Anzeigen der Richtung (53), in der sich der zweite Verkehrsteilnehmer (B) befindet.

9. Vorrichtung (80) zur Interaktion zwischen einem ersten (A) und einem zweiten Verkehrsteilnehmer (B), die für einen ersten Verkehrsteilnehmer (A), aufweist:
- einen Sender (81) zum Senden einer Fahrmanöver-Anfrage (7) von dem ersten Verkehrsteilnehmer (A) in seine Umgebung;
- einen Empfänger zum Empfangen eines Annehmen-Antwortsignals von dem zweiten Verkehrsteilnehmer (B);
- einen Prozessor zum Berechnen einer basierend auf der Fahrmanöver-Anfrage (7) bestimmten und mit einer an den zweiten Verkehrsteilnehmer (B) gegebenen Fahrmanöver-Empfehlung konsistenten Fahrmanöver-Empfehlung (47, 57) nach der Annahme; und
- einer Anzeigevorrichtung (85) zum Signalisieren (77) des Annehmens der Fahrmanöver-Anfrage, zum gemeinsamen Anzeigen von visuellen Darstellungen beider Verkehrsteilnehmer (A, B) in ihren relativen Orientierungen auf einer visuellen Darstellung des Fahrzeugumfelds während einer Durchführung von jeweiligen Fahrmanövern gemäß der Anfrage (7) und/oder der Fahrmanöver-Empfehlung (47, 57) und zum Signalisieren der Fahrmanöver-Empfehlung (47, 57) nach der Annahme.

10. Vorrichtung zur Interaktion zwischen einem ersten (A) und einem zweiten Verkehrsteilnehmer (B), die für einen zweiten Verkehrsteilnehmer (B) aufweist:
- einen Empfänger zum Empfangen eines für eine Fahrmanöver-Anfrage des ersten Verkehrsteilnehmers indikativen Anfragesignals;
- Mittel zum Annehmen der Fahrmanöver-Anfrage (7);
- einen Sender zum Senden eines Annehmen-Antwortsignals an den ersten Verkehrsteilnehmer (A);
- einen Prozessor zum Berechnen einer basierend auf der Fahrmanöver-Anfrage (7) bestimmten und mit einer an den ersten Verkehrsteilnehmer (A) gegebenen Fahrmanöver-Empfehlung konsistenten Fahrmanöver-Empfehlung (47, 57) nach der Annahme; und
- einer Anzeigevorrichtung zum gemeinsamen Anzeigen von visuellen Darstellungen beider Verkehrsteilnehmer (A, B) in ihren relativen Orientierungen auf einer visuellen Darstellung des Fahrzeugumfelds während einer Durchführung von jeweiligen Fahrmanövern gemäß der Anfrage (7) und/oder der Fahrmanöver-Empfehlung (47, 57) und zum Signalisieren der Fahrmanöver-Empfehlung (47, 57) nach der Annahme.

11. System zur Interaktion zwischen einem ersten (A) und einem zweiten Verkehrsteilnehmer (B), welches eine Vorrichtung nach Anspruch 9 und eine Vorrichtung nach Anspruch 10 umfasst.

## Claims

1. Method for interaction between a first (A) and a second road user (B), comprising:
- transmitting (71) a driving maneuver request (7) from the first road user (A) into its surroundings by means of a transmitter;
- receiving (73) a request signal indicative of the driving maneuver request (7) in the second road user (B) by means of a receiver;
- accepting (75) the driving maneuver request (7) in the second road user (B) using a means for accepting the driving maneuver request;
- transmitting an acceptance response signal to the first road user (A) by the second road user (B) by means of a transmitter;
- signaling (77) the acceptance of the driving maneuver request (7) in the first road user (A) by means of a display device (9); **characterized by** the further steps of:
- calculating a driving maneuver recommendation (47, 57), determined on the basis of the driving maneuver request (7), according to the acceptance by the second road user (B) by means of a processor in the second road user (B)
and signaling (79) the driving maneuver recommendation (47, 57) by means of a display device (27) in the second road user (B) and calculating a driving maneuver recommendation, consistent with the driving maneuver recommendation given to the second road user (B), for the first road user (A) by means of a processor in the first road user (A) and signaling (79) the driving maneuver recommendation (47, 57) by means of the display device (9) in the first road user (A); and
- jointly displaying, by means of the display device (9) in the first road user (A) and/or the display device (27) in the second road user (B), visual representations of both road users (A, B) in their relative orientations on a visual representation of the vehicle surroundings during execution of corresponding driving maneuvers according to the request (7) and/or the corresponding driving maneuver recommendation (47, 57).

2. Method according to claim 1, wherein, in the event of a cooperation process received by the two road users (A, B), this cooperation is visually **characterized in** at least one of the visual representations of both road users (A, B).

3. Method according to claim 1 or 2, wherein the corresponding driving maneuver recommendation (47, 57) is further determined on the basis of a position and/or a speed and/or acceleration and/or trajectory of at least one of the road users (A, B) and/or a roadway geometry.

4. Method according to any of the preceding claims, further comprising:
signaling (59), in the first (A) and/or the second road user (B), whether a driving maneuver is possible or is not possible.

5. Method according to any of the preceding claims, further comprising:
transmitting, from one of the road users (A, B), its own position and/or its own future driving maneuver and/or its own driving state and/or its own driving light states to the other road users.

6. Method according to any one of the preceding claims, wherein receiving the driving maneuver request (7) comprises:
visualizing (29), in the second road user (B), the driving maneuver request (7) on the display device (27).

7. Method according to any of the preceding claims, wherein the acceptance of the driving maneuver request comprises, in the second road user:
manual actuation of a switching mechanism (35) and/or voice input and/or actuation of a brake lever and/or automatic acceptance by an automatic driving control.

8. Method according to any of the preceding claims, wherein the acceptance of the driving maneuver request comprises, in the first road user (A):
signaling (49) and/or visualizing the acceptance and/or displaying the direction (53) in which the second road user (B) is located.

9. Device (80) for interaction between a first (A) and a second road user (B), which comprises, for a first road user (A):
- a transmitter (81) for transmitting a driving maneuver request (7) from the first road user (A) into its surroundings;
- a receiver for receiving an acceptance response signal from the second road user (B);
- a processor for calculating a driving maneuver recommendation (47, 57), determined on the basis of the driving maneuver request (7) and consistent with a driving maneuver recommendation given to the second road user (B), according to the acceptance; and
- a display device (85) for signaling (77) the acceptance of the driving maneuver request, for jointly displaying visual representations of both road users (A, B) in their relative orientations on a visual representation of the vehicle surroundings during execution of corresponding driving maneuvers according to the request (7) and/or the driving maneuver recommendation (47, 57) and for signaling the driving maneuver recommendation (47, 57) according to the acceptance.

10. Device for interaction between a first (A) and a second road user (B), which device comprises, for a second road user (B):
- a receiver for receiving a request signal indicative of a driving maneuver request of the first road user;
- means for accepting the driving maneuver request (7);
- a transmitter for transmitting an acceptance response signal to the first road user (A);
- a processor for calculating a driving maneuver recommendation (47, 57), determined on the basis of the driving maneuver request (7) and consistent with a driving maneuver recommendation given to the first road user (A), according to the acceptance; and
- a display device for jointly displaying visual representations of both road users (A, B) in their relative orientations on a visual representation of the vehicle surroundings during execution of corresponding driving maneuvers according to the request (7) and/or the driving maneuver recommendation (47, 57) and for signaling the driving maneuver recommendation (47, 57) according to the acceptance.

11. System for interaction between a first (A) and a second road user (B), which system comprises a device according to claim 9 and a device according to claim 10.

## Revendications

1. Procédé d'interaction entre un premier (A) et un second usager de la route (B), présentant :
- l'envoi (71) d'une demande de manoeuvre de conduite (7) du premier usager de la route (A) dans son environnement au moyen d'un émetteur ;
- la réception (73) d'un signal de demande indiquant la demande de manoeuvre de conduite (7) par le second usager de la route (B) au moyen d'un récepteur ;
- l'acceptation (75) de la demande de manoeuvre de conduite (7) par le second usager de la route (B) avec un moyen d'acceptation de la demande de manoeuvre de conduite ;
- l'envoi d'un signal de réponse d'acceptation au premier usager de la route (A) de la part du second usager de la route (B) au moyen d'un émetteur ;
- la signalisation (77) de l'acceptation de la demande de manoeuvre de conduite (7) par le premier usager de la route (A) au moyen d'un dispositif d'affichage (9) ; **caractérisé par** les étapes suivantes :
- le calcul d'une recommandation (47, 57) de manoeuvre de conduite déterminée sur la base de la demande de manoeuvre de conduite (7)
après l'acceptation de la part du second usager de la route (B) au moyen d'un processeur par le second usager de la route (B) et la signalisation (79) de la recommandation de manoeuvre de conduite (47, 57) au moyen d'un dispositif d'affichage (27) par le second usager de la route (B) et le calcul d'une recommandation de manoeuvre de conduite cohérente avec la recommandation de manoeuvre de conduite fournie au second usager de la route (B) pour le premier usager de la route (A) au moyen d'un processeur par le premier usager de la route (A) et la signalisation (79) de la recommandation de manoeuvre de conduite (47, 57) au moyen du dispositif d'affichage (9) par le premier usager de la route (A) ; et
- l'affichage commun au moyen du dispositif d'affichage (9) par le premier usager de la route (A) et/ou du dispositif d'affichage (27) par le second usager de la route (B)
de représentations visuelles des deux usagers de la route (A, B) dans leurs orientations relatives sur une représentation visuelle de l'environnement de véhicule pendant une réalisation de manoeuvres de conduite respectives conformément à la demande (7) et/ou la recommandation de manoeuvre de conduite (47, 57) respective.

2. Procédé selon la revendication 1, dans lequel, lors d'une coopération instaurée par les deux usagers de la route (A, B), cette coopération est **caractérisée** visuellement par au moins une des représentations visuelles des deux usagers de la route (A, B).

3. Procédé selon la revendication 1 ou 2, dans lequel la recommandation de manoeuvre de conduite (47, 57) respective est déterminée en outre sur la base d'une position et/ou d'une vitesse et/ou d'une accélération et/ou d'une trajectoire d'au moins un des usagers de la route (A, B) et/ou d'une géométrie de voie de circulation.

4. Procédé selon l'une des revendications précédentes, présentant en outre :
la signalisation (59), par le premier (A) et/ou le second usager de la route (B), établissant si une manoeuvre de conduite est possible ou impossible.

5. Procédé selon l'une des revendications précédentes, présentant en outre :
l'envoi, par un des usagers de la route (A, B), d'une position propre et/ou d'une manoeuvre de conduite future propre et/ou d'un état de conduite propre et/ou d'états de feux de circulation propres, à l'autre usager de la route respectif.

6. Procédé selon l'une des revendications précédentes, dans lequel la réception de la demande de manoeuvre de conduite (7) comprend :
la visualisation (29), par le second usager de la route (B), de la demande de manoeuvre de conduite (7) sur le dispositif d'affichage (27).

7. Procédé selon l'une des revendications précédentes, dans lequel l'acceptation de la demande de manoeuvre de conduite comprend, par le second usager de la route :
l'actionnement manuel d'un mécanisme de commutation (35) et/ou une entrée vocale et/ou l'actionnement d'un levier de frein et/ou l'acceptation automatique par une commande de conduite automatique.

8. Procédé selon l'une des revendications précédentes, dans lequel l'acceptation de la demande de manoeuvre de conduite comprend, par le premier usager de la route (A) :
la signalisation (49) et/ou la visualisation de l'acceptation et/ou l'affichage de la direction (53), dans laquelle le second usager de la route (B) se trouve.

9. Dispositif (80) d'interaction entre un premier (A) et un second usager de la route (B), qui, pour un premier usager de la route (A), présente :
- un émetteur (81) pour l'envoi d'une demande de manoeuvre de conduite (7) du premier usager de la route (A) dans son environnement ;
- un récepteur pour la réception d'un signal de réponse d'acceptation par le second usager de la route (B) ;
- un processeur pour le calcul d'une recommandation de manoeuvre de conduite (47, 57) déterminée sur la base de la demande de manoeuvre de conduite (7) et cohérente avec une recommandation de conduite fournie au second usager de la route (B) après l'acceptation ; et
- un dispositif d'affichage (85) pour la signalisation (77) de l'acceptation de la demande de manoeuvre de conduite, pour l'affichage commun de représentations visuelles des deux usagers de la route (A, B) dans leurs orientations relatives sur une représentation visuelle de l'environnement de véhicule pendant une réalisation des manoeuvres de conduite respectives conformément à la demande (7) et/ou la recommandation de manoeuvre de conduite (47, 57) et pour la signalisation de la recommandation de manoeuvre de conduite (47, 57) après l'acceptation.

10. Dispositif d'interaction entre un premier (A) et un second usager de la route (B), qui, pour un second usager de la route (B), présente :
- un récepteur pour la réception d'un signal de demande indiquant une demande de manoeuvre de conduite du premier usager de la route ;
- un moyen pour l'acceptation de la demande de manoeuvre de conduite (7) ;
- un émetteur pour l'envoi d'un signal de réponse d'acceptation au premier usager de la route (A) ;
- un processeur pour le calcul d'une recommandation de manoeuvre de conduite (47, 57) déterminée sur la base de la demande de manoeuvre de conduite (7) et cohérente avec une recommandation de conduite fournie au premier usager de la route (A) après l'acceptation ; et
- un dispositif d'affichage pour l'affichage commun de représentations visuelles des deux usagers de la route (A, B) dans leurs orientations relatives sur une représentation visuelle de l'environnement de véhicule pendant une réalisation des manoeuvres de conduite respectives conformément à la demande (7) et/ou la recommandation de manoeuvre de conduite (47, 57) et pour la signalisation de la recommandation de manoeuvre de conduite (47, 57) après l'acceptation.

11. Système d'interaction entre un premier (A) et un second usager de la route (B), qui comprend un dispositif selon la revendication 9 et un dispositif selon la revendication 10.
